# EUROPÄISCHE PATENTSCHRIFT

(11) **EP 2 437 226 B1**
(45) Veröffentlichungstag und Bekanntmachung des Hinweises auf die Patenterteilung: **16.12.2015**
(21) Anmeldenummer: 11183822.3
(22) Anmeldetag: 04.10.2011
(51) Int. Cl.: G08B 17/10, G08B 25/00, G08B 17/00, H04W 84/18

(54) **Rauchmelder-Alarmsystem und Verfahren zum Betreiben eines Rauchmelder-Alarmsystems**
Smoke alarm system and method for operating same
Système d'alarme de détecteur de fumée et procédé de fonctionnement d'un système d'alarme de détecteur de fumée

(30) Priorität: 01.10.2010 DE 102010047099
(43) Veröffentlichungstag der Anmeldung: 04.04.2012
(73) Patentinhaber: Dietsch, Matthias, 79677 Schönau (DE)
(72) Erfinder: Dietsch, Matthias, 79677 Schönau (DE)
(74) Vertreter: Wagner, Kilian

(56) Entgegenhaltungen:
- EP-A2- 2 020 785
- WO-A1-00/74402
- WO-A1-2009/119340
- US-A- 5 815 075
- US-A1- 2007 063 837
- US-A1- 2007 211 681
- US-A1- 2008 170 511
- US-A1- 2009 033 513

## Beschreibung

Die vorliegende Erfindung betrifft ein Rauchmelder-Alarmsystem nach dem Oberbegriff des Hauptanspruchs, wie es aus der US 2007/211681 bekannt ist, sowie ein Verfahren zum Betreiben eines Rauchmelder-Alarmsystems.

Aus dem Stand der Technik sind modulartig aufgebaute, jeweils Rauchsensormittel zur Rauchdetektion sowie Alarmmittel zum Ausgeben eines akustischen Alarmsignals aufweisende Rauchmeldereinheiten allgemein bekannt, welche, typischerweise netzspannungsunabhängig mit Batteriestrom betrieben, an geeignete Messpositionen in Gebäuden befestigt werden können und im Detektionsfall eines Rauchgases Alarm auslösen.

Weiterhin ist als aus dem Stand der Technik bekannt vorauszusetzen eine Anordnung aus einer Mehrzahl derartiger, modulartig ausgebildeter Rauchmeldereinheiten, welche über drahtgebundene oder drahtlose Kommunikationspfade miteinander Daten austauschen; bekannt ist es etwa aus der Hausautomationstechnik, eine Mehrzahl von Rauchmeldereinheiten mit einem (typischerweise standardisierten) Bussystem zu verschalten, um so eine typischerweise zentralisierte Konfiguration, Parametereinstellung und/oder Alarmabfrage der einzelnen, an das Bussystem als Stationen angeschlossenen Rauchmeldereinheiten vornehmen zu können.

Als drahtlose Varianten sind mit Hilfe von Funkmodulen verbundene Rauchmeldereinheiten als bekannt vorauszusetzen, bei welchen geeignet standardisierte (bzw. in typischen vorgegebenen Frequenzbändern betriebene) Sendereinheiten einer jeweiligen Rauchmeldereinheit zugeordnet sind und etwa im Rauchdetektion- bzw. Alarmfall die Möglichkeit bieten, dass nicht nur lokal (d.h. an der jeweils betreffenden Einheit) das optische bzw. akustische Alarmsignal ausgelöst wird, sondern auch an einer vorbestimmten Position im Netz einer Alarmerfassung bzw. Alarmgabe erfolgen kann.

Gegenüber busbasierten, drahtgebundenen Systemen weisen derartige drahtlose Rauchmeldersysteme den Vorteil einfacher Einbau- und Vernetzbarkeit auf, wobei sich damit derartige funkbasierte Systeme insbesondere auch etwa für eine Nachrüstung oder einen Einbau in existierende Gebäudebereiche ohne die Notwendigkeit von Verkabelungen eignen. Auch ist es in diesem Zusammenhang bekannt, qualitativ nicht ausreichende Funkstrecken (aufgrund z.B. eines langen Abstands zwischen zwei benachbarten Einheiten und/oder einer eine Dämpfung bewirkende Barriere) mit Hilfe sogenannter Repeater zu unterstützen, d.h. Hochfrequenz-Vorrichtungen, welche als Sende-/Empfangsstation einen effektiven Funkpfad verlängern können.

Allerdings sind sämtliche derartige Vorrichtungen, welche typischerweise zum Zeitpunkt ihrer Installation konfiguriert und getestet werden, anfällig für Verschlechterungen, wie sie etwa durch Degradation, Veränderungen in den Räumen und/oder Umweltbedingungen, oder andere Faktoren entstehen, und welche zudem oftmals auch graduell und schleichend und nicht etwa sprungweise auftreten. Die Konsequenz ist dann, dass möglicherweise eine im Zustand der Erstkonfiguration ordnungsgemäß funktionierende, per Kommunikationspfad wirksam angebundene Rauchmeldereinheit aufgrund einer derartigen Verschlechterung nicht mehr mit einer Zentraleinheit bzw. einer anderen Rauchmeldereinheit kommuniziert, was sich insbesondere dann im Fall einer tatsächlichen Alarmsituation als fatal erweisen kann.

Diese Situation wird dadurch verschärft, dass etwa in Deutschland aktuell keine verbildliche Norm die Minimalerfordernisse während eines dauernden Überwachungsbetriebs von Rauchmeldervorrichtung regelt. Vielmehr sind lediglich Erfahrungswerte bzw. Konfigurationsparameter bekannt und üblich, welche zum Zeitpunkt der Erstkonfiguration erreicht werden müssen, welche jedoch, wie diskutiert, insbesondere anfällig für (graduelle) Verschlechterungseffekte sind.

Insoweit sind auch typischerweise periodisch vorgenommene Wartungsmaßnahmen an gattungsgemäßen Rauchmelder-Alarmsystemen ungeeignet, die vollständige Funktionalität eines solchen Systems zu prüfen; häufig wird nämlich lediglich durch punktuelles Erzeugen eines Raucheffekts und dadurch provoziertes Auslösen eines zugehörigen Rauchmelders geprüft, ob überhaupt ein Kommunikationspfad funktioniert. Ob dagegen weitere Kommunikationspfade noch betriebstauglich sind, lässt sich aus derartigen punktuellen Überprüfungen nicht ermitteln.

Zum weiteren Stand der Technik werden genannt die US 2007/211681 A1, EP 2 020 785 A2, die US 2008/170511 A1, die US 2007/063837 A1, die WO 2009/119340 A1, die US 5 815 075 A, die US 2009/033513 A1, die WO 00/74402 A1.

Aufgabe der vorliegenden Erfindung ist es, ein gattungsgemäßes Rauchmelder-Alarmsystem im Hinblick auf eine Zuverlässigkeit und Betriebssicherheit der Kommunikation zwischen der Mehrzahl der Rauchmeldereinheiten (auch im Hinblick auf einen potentiell jahrelangen Detektor-Dauerbetrieb) zu verbessern, insbesondere eine kontinuierliche Funktionsfähigkeit und Qualität einer Mehrzahl auch von alternativen und potentiell redundant voneinander benutzbaren Kommunikationspfaden zwischen der Mehrzahl der Rauchmeldereinheiten sicherzustellen und einfacher erfassbar zu machen und damit im Ergebnis ein System zu schaffen, welches auch unter verschlechterten und ungünstigen Umweltbedingungen eine zuverlässige Alarmgabe im System der Rauchmeldereinheiten schafft. Ferner ist ein entsprechendes Betriebsverfahren zu schaffen.

Die Aufgabe wird durch das Rauchmelder-Alarmsystem mit den Merkmalen des Hauptanspruchs sowie das Betriebsverfahren nach dem unabhängigen Patentanspruch 8 geschützt; vorteilhafte Weiterbildungen der Erfindung sind in den Unteransprüchen beschrieben.

In erfindungsgemäß vorteilhafter Weise sind dabei die einzelnen Rauchmeldereinheiten des Systems so eingerichtet, dass diese nicht nur in der ansonsten bekannten Weise die Rauschsensor- und Alarmmittel für eine jeweils lokale Detektion und Alarmgabe aufweisen, vielmehr ermöglichen es die erfindungsgemäß vorgesehenen Mittel zur Erfassung der Übertragungsqualität in jeder Einheit, jeden möglichen Übertragungspfad zu einer anderen Rauchmeldereinheit des Systems festzustellen, und zwar nicht nur einmalig und/oder während der Erstkonfiguration des Systems, sondern im Rahmen der Erfindung periodisch, bevorzugt in regelmäßigen Abständen und damit so, dass ständig eine aktuelle Information über aktuelle Übertragungsbedingungen (und damit über die Zuverlässigkeit der Alarmverbindung zwischen den Einheiten) vorliegt. Als "Übertragungsqualität" im Rahmen der Erfindung werden dabei technische Eigenschaften des Übertragungspfades verstanden, welche die Zuverlässigkeit einer Datenübertragung fördern oder sicherstellen. Im Fall einer vorbasierten drahtlosen Übertragungstechnik gehören dazu insbesondere eine Signal- bzw. Feldstärke der übertragenen Signale, ferner Dämpfungswerte einer Strecke (Übertragungspfad) und/oder Werte über gegebenenfalls vorhandene Störungen, Reflektionen, Übersprechen o.dgl. eine Übertragungsqualität herabsetzende Faktoren.

In weiterhin erfindungsgemäß vorteilhafter Weise sind den Erfassungsmitteln (lokale oder an einer Position im Netz angeordnet) Speichermittel zur Ablage der der Übertragungsqualität entsprechenden Signalparameter zugeordnet. Da im Rahmen bevorzugter Realisierungsformen der Erfindung jeder denkbare Übertragungspfad zwischen zwei Rauchmeldereinheiten erfasst (mittels eines Signalparameters bewertet) und gespeichert wird, enthält so etwa eine tabellarisch konfigurierte Speichereinheit mit n im System teilnehmenden Rauchmeldereinheiten n · n - n unterschiedliche, zu speichernde Signalparameter.

Damit wird gemäß der vorliegenden Erfindung eine dezentrale Struktur geschaffen, d.h. ein Alarmsystem, bei welchem die Mehrzahl der Rauchmeldereinheiten zueinander ohne ein hierarchisches Verhältnis stehen und damit gleichrangig miteinander kommunizieren.

Weiterhin vorteilhaft im Rahmen der Erfindung wird dann, bevorzugt automatisch und ohne zusätzlichen notwendigen Eingriff, von jeder der Rauchmeldereinheiten ein Kommunikationspfad zu einer jeweils anderen Rauchmeldereinheit bestimmt. Hierbei kann es sich entweder um den direkten, unmittelbaren Übertragungspfad handeln (welcher als solcher bekannt und parametrisch erfasst ist), es kann jedoch auch alternativ ein indirekt (mittelbar) gebildeter Pfad sein, etwa dann, wenn sich ein unmittelbarer Übertragungspfad im Hinblick auf die Übertragungsqualität (etwa konkret die gemessene Signalstärke) als nicht ausreichend oder zuverlässig erweist (etwa anhand eines geeigneten kritischen Schwellwertes).

Im Rahmen der Erfindung ist es dann vorteilhaft vorgesehen, diese die zuverlässige Signalübertragung im Alarmsystem sicherstellenden Schritte des Erfassens der Übertragungsqualität (insbesondere Signalstärke), des Ablegens eines zugehörigen Signalparameters in einer Speichereinheit (bzw. eine entsprechende Aktualisierung eines schon gespeicherten Wertes durch einen jeweils aktuellen Signalparameter) sowie das Bestimmen eines jeweiligen Kommunikationspfades aus den Übertragungspfaden kontinuierlich und periodisch vorzunehmen, also nicht nur einmalig und zu Beginn (bzw. mit der Erstkonfiguration) eines Systemsbetriebs, sondern auch während eines fortgesetzten, potenziell lang andauernden, mehrjährigen Betriebs.

Im Rahmen der Erfindung und vorteilhaft ist es zudem vorgesehen, dass als Reaktion auf einen detektierten Alarmzustand einer der Rauchmeldereinheiten (also z.B. eine alarmkritische Rauchkonzentration an den dortigen Rauchsensormitteln) diese Rauchmeldereinheit über die zu dieser Rauchmeldereinheit führenden Kommunikationspfade sämtliche weiteren Rauchmeldereinheiten des Systems kontaktiert und, neben den eigenen Alarmmitteln, auch die Alarmmittel der über das System angebundenen weiteren Rauchmeldereinheiten auslöst. Durch die vorsehend beschriebene, im Hinblick auf Übertragungssicherheit optimierte und kontinuierlich überwachte Signalqualität entlang der Übertragungspfade ist dabei sichergestellt, dass auch tatsächlich sämtliche Rauchmeldereinheiten des Systems alarmgebend aktiviert werden können und nicht etwa zwischenzeitlich aufgetretene Degradationen o.dgl. Verschlechterungen der Umgebungsbedingungen dazu geführt haben, dass einzelne Rauchmeldereinheiten nicht mehr drahtlos erreicht werden können.

In erfindungsgemäß vorteilhafter Weise wird die beschriebene vorteilhafte permanente Prüfung und Überwachung der Übertragungs- und Kommunikationspfade unterstützt durch Anzeige- und Visualisierungsmittel, die, etwa zum Zugriff durch eine Überwachungsperson, aktuelle oder vergangene Signalparameter mit den entsprechenden Rauchmeldereinheiten des Systems verknüpfen, daraus geeignete Bilddarstellungen entwickeln und so die komplexen, mehrdimensionalen Zusammenhänge einfach erfassbar graphisch darstellen. Zu den erfindungsgemäß vorgesehenen Möglichkeiten gehört es dabei auch, etwa geeignet graphisch eine Veränderung von Signalparametern, Kommunikations- bzw. Übertragungspfaden zwischen einzelnen Rauchmeldereinheiten darzustellen, um insoweit proaktiv auf sich bereits abzeichnende zukünftige Fehlerquellen reagieren zu können, etwa indem ungünstige Montageorte von Rauchmeldereinheiten versetzt werden oder Maßnahmen gegen sich verschlechternde Umgebungsbedingungen ergriffen werden können.

Weiter vorteilhaft im Rahmen der Erfindung ist es weiterbildungsgemäß vorgesehen, dem Rauchmelder-Alarmsystem mit der Mehrzahl der Rauchmeldereinheiten eine Steuereinheit in Form eines Netzwerk-Teilnehmers zuzuordnen, typischerweise realisiert durch einen Personalcomputer o.dgl. Einheit (alternativ insbesondere auch ein geeignet über vergleichbare Übertragungsmittel angebundenes, drahtlos angekoppeltes, portables Computer- oder Kommunikationssystem), welches über gängige spezifisch erstellte Software sowohl anfängliche Konfigurations- und Parametrisierungsaufgaben übernehmen kann, zusätzlich auch, durch direkte oder indirekte Kommunikation mit den Rauchmeldereinheiten, aktuelle jeweilige Betriebsparameter (eingeschlossen etwa einem Batteriezustand) überwachen kann und, zusätzlich weiterbildungsgemäße, etwa mit einem öffentlichen Datenübertragungsnetz (z.B. Internet) über geeignet vorgesehene Datenkommunikationsmittel verbindbar ist, so dass auch eine beliebige entfernte Überwachung, Parametrisierung und Konfiguration des Alarmsystems möglich ist. Dieser Konfigurationsteilnehmer ändert jedoch nicht den dezentralen Charakter des erfindungsgemäßen Alarmsystems.

Im Rahmen bevorzugter Weiterbildungen der Erfindung ist die drahtlose Datenkommunikation der Übertragungsmittel auf Funkbasis vorgesehen, wobei hier weiterbildungsgemäß die üblichen zugänglichen Bänder (ISM zwischen 433 und 434 MHz, SDR zwischen 868 und 870 MHz usw.) geeignet sind. zusätzlich weiterbildungsgemäß sind die Sende- und Empfangseinheiten dieser Hochfrequenz-Übertragungsmittel für eine Mehrzahl von Übertragungskanälen in diesen Frequenzbändern ausgestaltet, welche geeignet vorbestimmt oder automatisch (wiederum etwa abhängig von den Singalparametern) angesteuert und ausgewählt werden können, um so die Signalqualität innerhalb des Alarmsystems zu verbessern.

Insbesondere bei Hochfrequenz-Übertragungsmitteln zur Realisierung des drahtlosen Datenaustausches und zur Senkung des Energieverbrauchs in einem (beispielhaft batteriebetriebenen) drahtlosen System ist es zudem vorteilhaft, die im Rahmen der Erfindung ohnehin vorhandene permanente Überwachung auf Übertragungsqualität zu benutzen, um eine jeweilige Sendeleistung der den einzelnen Rauchmeldereinheiten zugeordneten Übertragungsmittel auf ein Maß abzusenken, welches zuverlässige Übertragungseigenschaften mit minimiertem elektrischen Energieverbrauch kombiniert. Insoweit ist die weiterbildungsgemäße anpassbare (bevorzugt absenkbare) Hochfrequenz-Sendeleistung synergistisch mit dem erfindungsgemäßen Gesamtsystem und ermöglicht Effizienzvorteile beim Batterieeinsatz oder Batterie-Austausch (etwa als Abkehr von üblichen, standardisierten Batterie-Austauschintervallen).

Im Ergebnis überwindet die vorliegende Erfindung wirksam die sich aus dem Stand der Technik ergebenden Probleme dezentraler Vernetzung für Rauchmelder-Alarmsysteme. Insbesondere sorgt nämlich die durch die vorliegende Erfindung erreichte wirksame und wiederholte Überprüfung der Konvektivität aller drahtlos angebundenen Rauchmeldereinheiten im laufenden Betrieb, dass in einem Alarmfall zuverlässig sämtliche Systemteilnehmer aktiviert werden, ohne dass - kommunikationspfadbedingte - Ausfälle befürchtet werden müssen.

Gleichzeitig ist die vorliegende Erfindung von großer struktureller Einfachheit geprägt, da im einfachsten Fall ein sich adaptierendes und selbst überwachendes System lediglich mit einer Gruppe von Rauchmeldereinheiten als Teilnehmer des Systems errichtet und betrieben werden kann.

Weitere Vorteile, Merkmale und Einzelheiten der Erfindung ergeben sich aus der Beschreibung von Ausführungsbeispielen sowie anhand der Zeichnungen; diese zeigen in
- Fig. 1: eine exemplarische Topologie des Rauchmelder-Alarmsystems mit vier untereinander drahtlos verbundenen Rauchmeldereinheiten sowie einer zusätzlich drahtlos angebundenen Computereinheit (PC) zur Konfiguration und Systemüberwachung; und
- Fig. 2: ein Blockschaltbild der wesentlichen Funktionskomponenten einer Rauchmeldereinheit als Teilnehmer des Systems in der Fig. 1.

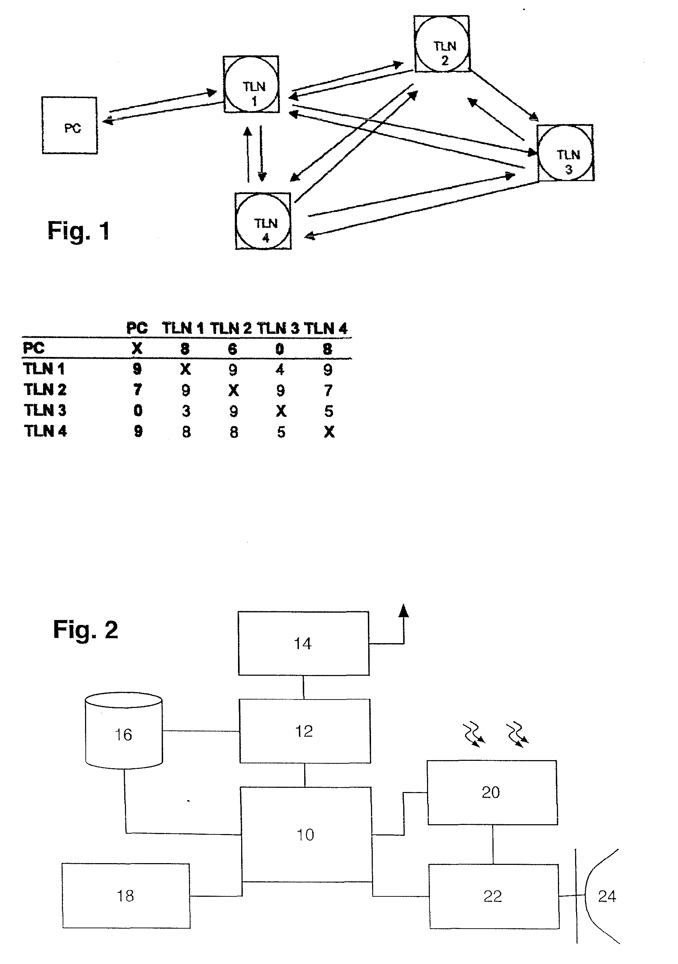

Die Fig. 1 zeigt ein erfindungsgemäß dezentrales Rauchmelder-Alarmsystem in Form einer Topologiedarstellung mit insgesamt vier Rauchmeldereinheiten TLN1 bis TLN4, welche jeweils gemäß schematischem Blochschaltbild der Fig. 2 aufgebaut sind und, wie in Fig. 1 gezeigt, drahtlos unter Ausbildung von direkten Übertragungspfaden jeweils miteinander verbunden sind. Zusätzlich zeigt die Topologiedarstellung der Fig. 1 eine über entsprechende Hochfrequenzmittel drahtlos angebundene Konfiguriereinheit, realisiert durch einen Personalcomputer (PC), welcher in nachfolgend zu beschreibender Weise zur Überwachung bzw. Ersteinrichtung des Systems dient.

Jede Rauchmeldeeinheit als Teilnehmer des in Fig. 1 gezeigten Alarmsystems weist, wie in Fig. 2 gezeigt, eine zentrale Steuereinheit 10, typischerweise realisiert durch eine geeignet programmierte Mikrocontrollereinheit, auf, welche zusammenwirkt mit einer eine Sende- sowie Empfangsfunktionalität in einen geeigneten Hochfrequenzband, z.B. ISM, aufweisenden Hochfrequenzeinheit 14 (mit symbolisch gezeigter Antenne). Dieser vorgeschaltet ist eine Netzwerk- und Protokolleinheit, welche in der erfindungsgemäßen Weise für eine Bestimmung der Übertragungsqualität eines jeweiligen Übertragungspfades zu einem benachbarten Systemteilnehmer durch Erfassung einer Übertragungssignalstärke, einer Übertragungsdämpfung oder von Störeinflüssen ausgebildet ist; ferner ist die Einheit 12 vorgesehen, um in Abhängigkeit von einem derartig erzeugten Signalparameter (bezogen auf einen Übertragungspfad) eine Kanalumschaltung der mehrkanalig ausgebildeten Hochfrequenz-Einheit 14 vorzunehmen.

Konkret verdeutlich der Vergleich der Fig. 1 und 2 die Funktionalität des Ausführungsbeispiels: Die jeweiligen Doppelpfeile in Fig. 1 symbolisieren die zwischen den Teilnehmern TLN1 bis TLN 4 gebildeten Übertragungspfade; es zeigt sich, dass jede Rauchmeldereinheit mit jeder anderen Einheit über einen bidirektionalen Pfad (welcher im Rahmen des vorliegenden Ausführungsbeispiels separat erfasst und überwacht wird) verbunden ist. Entsprechend erbringt die Erfassung einer typischen (auf einen Bereich zwischen 0 und 9 exemplarisch normierten) Signalstärke dieser Übertragungspfade Werte, welche in der der Fig. 1 zugeordneten Tabelle dargestellt und abgelegt sind; die Spalte der Tabelle bezeichnet dabei die Sende-, die oberste Reihe die Empfangsstationen. In der konkreten Realisierung einer jeweiligen Teilnehmereinheit (Rauchsensoreinheit) werden dann derartige Signalstärkewerte als Signalparameter in einer mit der zentralen Verarbeitungseinheit 10 bzw. der Netzwerkeinheit 12 zusammenwirkenden Datenspeichereinheit 16 abgelegt.

Erfindungsgemäß vorteilhaft wird die Feststellung der Signalparameter der Übertragungspfade zunächst während einer Ersteinrichtung (Konfiguration) des Systems durchgeführt, darüber hinaus periodisch (bevorzugt zu regelmäßigen Zeitpunkten) während eines Überwachungsbetriebs. Insoweit sind die in der Einheit 16 und exemplarisch in der Tabelle der Fig. 1 gezeigten Werte nicht statisch, sondern verändern sich in Abhängigkeit von einer jeweils aktuellen Messung.

Die zentrale Verarbeitungseinheit 10 führt nunmehr auf der Basis dieser Signalparameterwerte Ermittlungen durch, wie zwischen verschiedenen Rauchmeldereinheiten, insbesondere, bezogen auf eine Rauchmeldereinheit, zu den jeweils anderen Rauchmeldereinheiten, ein besonders zuverlässiger (d.h. in der Signalqualität günstiger) Pfad geschaffen werden kann. Während es sich zunächst anbietet, auf der Basis der Signalwerte unmittelbare Kommunikation (d.h. eine unmittelbare Kontaktaufnahme) mit einer jeweiligen anderen der Rauchmeldereinheiten vorzunehmen, könnte es günstig sein, einen derartigen Kommunikationspfad auch indirekt vorzunehmen. So zeigt etwa die Tabelle der Fig. 1, dass sowohl im Hin- als auch im Rückpfad zwischen den Rauchmeldereinheiten TLN1 und TLN3 relativ schwache Signalstärken vorherrschen. Zum einen könnte dies, im Hinblick auf zukünftige verschlechterte Umgebungsbedingungen, als auch einen erhöhten Energieverbrauch durch eine hohe notwendige Sendeleistung der Hochfrequenz-Module 14, nachteilig sein, so dass etwa ein Kommunikationspfad zwischen den Einheiten TLN1 und TLN3 auch unter Zwischenschaltung der Einheit TLN2 geschehen kann; wie die Tabelle der Fig. 1 verdeutlicht, sind für diese indirekten Kommunikationspfade über sämtliche Stufen und in sämtliche Richtungen die aktuellen Signalstärken günstiger. Entsprechend würde die Netzwerkeinheit als Reaktion auf eine derartige Festlegung einen Kommunikationspfad für die Einheit TLN1 zur TLN3 über die Einheit TLN2 in der Art eines Routings leiten, wobei vorteilhaft, im Rahmen des vorliegenden Systems, dann gegebenenfalls sogar die Möglichkeit besteht, eine (den Energieverbrauch beeinflussende) Sendeleistung des Hochfrequenzmoduls 14 der beteiligten Einheiten herabzusetzen, ohne dass die Übertragungsqualität in nachteiliger Weise leitet. Konkret könnte etwa dies anhand von Schwellwerten geschehen, mit welchen die (in der Fig. 1 schematisch und normiert gezeigten) Feldstärke- bzw. Signalstärkewerte verglichen werden können.

Zusätzlich zu den diskutierten Funktionseinheiten weist jede Rauchmeldereinheit des Systems der Fig. 1 eine Energieversorgungseinheit 18 auf, welche typischerweise drahtlos mit Hilfe von Batterien realisiert ist und die Einheit mit der nötigen Betriebsenergie versorgt.

Ferner mit der zentralen Verarbeitungseinheit 10 verbunden ist eine Rauchdetektoreinheit 20, welche in ansonsten bekannter Weise, etwa chemisch oder optisch, zur Rauchdetektion ausgebildet ist und mit einer Alarmeinheit zusammenwirkt, welche als Reaktion auf das Überschreiten kritischer Detektorschwellwerte als Alarmsignal an eine Alarmgebereinheit 24, im dargestellten Beispiel eine Lautsprechereinheit, ausgibt. Zusätzlich eignet sich die Alarmeinheit 20 mit nachgeschalteter Gebereinheit 24 dafür, Betriebsparameter der Vorrichtung, etwa das Unterschreiten einer kritischen Batterieversorgungsspannung (der Einheit 18) zu signalisieren; ergänzend oder alternativ können derartige Betriebsparameter auch über die Hochfrequenzeinheit 14 zu einer angeschlossenen Verwaltungseinheit (die Fig. 1 zeigt insoweit die PC-Einheit) weitergeleitet werden.

Die vorliegende Erfindung ist nicht auf das gezeigte Ausführungsbeispiel beschränkt. So kann etwa eine weitere Einheit, hinzugefügt zum System der Fig. 1, nicht nur zusätzliche Bereiche als Detektor überwachen, auch kann diese, eingeschaltet in das beschriebene Routing-System, das Übertragungs- und Kommunikationsverhalten der Systemteilnehmer untereinander verbessern und Sicherheit sowie Energieeffizienz erhöhen.

Ergänzend oder alternativ ist es im Rahmen bevorzugter Weiterbildungen der Erfindung möglich, lokal und insbesondere zum Zweck einer Konfiguration während einer Montage (also einer Einrichtung des Systems durch Vorsehen der jeweiligen Rauchmeldereinheiten an ihren vorgesehenen Einsatzpositionen) eine schnelle Betriebsbereitschaft zu erreichen. So ist es weiterbildungsgemäß etwa möglich, im Rahmen eines von der zentralen Steuereinheit 10 vorgesehenen Inbetriebnahmemodus, eine Verbindung zu einem jeweiligen Partner (gegebenenfalls unter optischer oder akustischer Anzeige einer zugehörigen Signalstärke) anzuzeigen, wobei es diesbezüglich vorteilhaft möglich ist, einen solchen Inbetriebnahmemodus in allen Funkteilnehmern zu aktivieren und dann, etwa über eine (nicht gezeigte) manuell zu betätigende Taste bei jedem montierten bzw. zu montierenden Netzwerkteilnehmer die zuverlässige Verbindung abzufragen. Im Positivfall ergeht ein entsprechendes Quittungssignal.

Während des Systemsbetriebs werden, wie beschrieben, die bei der Inbetriebnahme erzeugten oder im weiteren Verlauf modifizierten Kommunikationspfade periodisch überprüft. Dies geschieht durch Wirkung der Netzwerkeinheit in Form von geeigneten Datentelegrammen (sogenannten Lebenszeichentelegrammen), wobei damit dann ein jeweils bester Pfad (im Hinblick auf die Übertragungsqualität) typischerweise ausgewählt wird. Lediglich für den Fall, dass vorgegebene Schwellwerte dieser Signalqualität dann unterschritten werden, wird im Rahmen des Systems (bzw. einer Steuerung der zentralen Steuereinheit eines jeweiligen der Teilnehmer) eine hochfrequenzmäßige Kanalumschaltung vorgenommen und/oder ein alternatives Routing entsprechend der vorbeschriebenen Weise gesucht.

Sollten diese Maßnahmen ergeben, dass nach wie vor eine ordnungsgemäße Signalqualität entlang eines Kommunikationspfades nicht (mehr) möglich ist, ist das System zum Ausgeben eines entsprechenden Warnsignals eingerichtet, um insoweit zu signalisieren, dass gegebenenfalls eine Neupositionierung eines oder mehrer Rauchmeldereinheiten erfolgen muss.

In den Figuren nicht gezeigt ist eine mittels der PC-Einheit der Fig. 1 realisierbare Visualisierung eines jeweiligen aktuellen Alarmsystemstatuses, wobei etwa ein Diagramm analog der in Fig. 1 gezeigten Weise, ggf. unterstützt durch eine farbig oder auf andere Weise markierte Anzeige jeweiliger Signalstärken und ggf. abweichend gerouteter Kommunikationspfade, eine typische Realisierungsform ist.

Im Ergebnis entsteht durch die vorliegende Erfindung ein hochgradig ausfallsicheres selbstorganisierendes und gleichwohl strukturell einfaches System zur Verschaltung einer Mehrzahl von Rauchmeldern in einem Alarmsystems, welches sowohl energetisch, als auch im Hinblick auf die Betriebssicherheit signifikante Fortschritte bedeutet.

## Patentansprüche

1. Rauchmelder-Alarmsystem mit
einer Mehrzahl von drahtlos miteinander verbundenen und zum Austausch von Daten eingerichteten Rauchmeldereinheiten (TLN),
die jeweils an einem zu überwachenden Ort stationär anbringbar ausgebildet sind, Übertragungsmittel (14) für den drahtlosen Datenaustausch sowie Rauchsensormittel (20) zur Rauchdetektion aufweisen, wobei eine Mehrzahl der Rauchmeldereinheiten jeweils Mittel (12) zur Erfassung von einer Übertragungsqualität, insbesondere Übertragungssignalstärke, Übertragungsdämpfung und/oder Übertragungsstörungswerte, eines unmittelbaren Übertragungspfades zu einer jeweiligen anderen, insbesondere jeder anderen, der Rauchmeldereinheiten aufweist,
die Erfassungsmittel Speichermittel (16) zur Ablage eines der Übertragungsqualität entsprechenden Signalparameters zu den jeweiligen anderen Rauchmeldereinheiten aufweisen und so ausgebildet sind, dass auf der Basis der abgelegten Signalparameter der unmittelbare Übertragungspfad oder ein über eine zwischenliegende Rauchmeldereinheit oder Repeatereinheit gebildeter indirekter Übertragungspfad zu jeder der anderen Rauchmeldereinheiten als Kommunikationspfad periodisch und während eines Überwachungsbetriebs in Abhängigkeit von den Signalparametern bestimmt und abgelegt wird
**dadurch gekennzeichnet,**
**dass** die Rauchmeldereinheiten Alarmmittel (22) zum Ausgeben eines akustischen und/oder optischen Alarmsignals aufweisen und die Erfassungsmittel so ausgebildet sind, dass als Reaktion auf ein Rauchdetektionssignal der Rauchsensormittel eine Aktivierung der Alarmmittel jeder der anderen Rauchmeldereinheiten über die Kommunikationspfade erfolgt,
wobei der Mehrzahl von Rauchmeldereinheiten Anzeige- und Visualisierungsmittel zugeordnet sind, die, mittels einer Displayeinheit, die aktuell bestimmten und abgelegten Übertragungspfade und die Kommunikationspfade und jeweils zugehörige Signalparameter als graphische Darstellung anzeigen.

2. Rauchmelder-Alarmsystem nach Anspruch 1,
**dadurch gekennzeichnet,**
**dass** die Anzeige- und Visualisierungsmittel separat (PC) oder in zumindest eine der Rauchmeldereinheiten integriert sind.

3. Rauchmelder-Alarmsystem nach Anspruch 1 oder 2,
**dadurch gekennzeichnet,**
**dass** der Mehrzahl von Rauchmeldereinheiten separate Einrichte- und/oder Steuermittel (PC) zugeordnet sind, die für eine Konfiguration, Parametrisierung und/oder Überwachung der Rauchmeldereinheiten ausgebildet sind und bevorzugt mittels einer Computereinheit realisiert sind.

4. Rauchmelder-Alarmsystem nach Anspruch 3,
**dadurch gekennzeichnet,**
**dass** den Einrichte- und/oder Steuermitteln Datenkommunikationsmittel zum Zugriff über ein bevorzugt öffentliches Datenübertragungsnetz zugeordnet sind.

5. Rauchmelder-Alarmsystem nach einem der Ansprüche 1 bis 4,
**dadurch gekennzeichnet,**
**dass** die Übertragungsmittel der Rauchmeldereinheiten zur Funkübertragung über eine Mehrzahl separat voneinander zugreif- und/oder auswählbarer Funkkanäle ausgebildet sind.

6. Rauchmelder-Alarmsystem nach Anspruch 5,
**dadurch gekennzeichnet,**
**dass** die Übertragungsmittel so ausgebildet sind, dass eine Kanalwahl für einen Übertragungspfad in Abhängigkeit von dem Signalparameter erfolgt.

7. Rauchmelder-Alarmsystem nach Anspruch 5 oder 6,
**dadurch gekennzeichnet,**
**dass** die Übertragungsmittel einer Rauchmeldereinheit so ausgebildet sind, dass eine Hochfrequenz-Sendeleistung der Übertragungsmittel in Abhängigkeit von den Signalparametern der Übertragungspfade zu den anderen Rauchmeldereinheiten veränderbar ist, insbesondere sich automatisch auf einen vorbestimmten Mindest- oder Maximalwert der Signalparameter anpasst.

8. Verfahren zum Betreiben eines Rauchmelder-Alarmsystems mit einer Mehrzahl von drahtlos miteinander verbundenen und zum Austausch von Daten eingerichteten Rauchmeldereinheiten, die jeweils an einem zu überwachenden Ort stationär anbringbar ausgebildet sind, Übertragungsmittel für den drahtlosen Datenaustausch, Rauchsensormittel zur Rauchdetektion sowie Alarmmittel zum Ausgeben eines akustischen und/oder optischen Alarmsignal aufweisen, zum Betreiben des Rauchmelder-Alarmsystems nach einem der Ansprüche 1 bis 7, **gekennzeichnet durch** die Schritte:
- Erfassen einer Übertragungsqualität, insbesondere Übertragungssignalstärke, Übertragungsdämpfung und/oder Übertragungsstörungswerte, eines unmittelbaren Übertragungspfades zwischen allen Rauchmeldereinheiten des Rauchmelder-Alarmsystems,
- Ablegen eines der Übertragungsqualität entsprechenden Signalparameters für jeden der unmittelbaren Übertragungspfade in einer Speichereinheit mindestens einer der Rauchmeldereinheiten,
- Bestimmen eines Kommunikationspfades für jede der Rauchmeldereinheiten zu jeder anderen der Mehrzahl der Rauchmeldereinheiten als der unmittelbare Übertragungspfad oder als über eine zwischenliegende Rauchmeldereinheit und/oder eine Repeatereinheit gebildeten indirekten Übertragungspfad,
- und Aktivieren der Alarmmittel jeder der anderen Rauchmeldereinheiten als Reaktion auf ein Rauchdetektionssignal der Rauchsensormittel einer Rauchmeldereinheit über die Kommunikationspfade,
wobei das Erfassen der Übertragungsqualität, das Ablegen des der Übertragungsqualität entsprechenden Signalparameters und das Bestimmen des Kommunikationspfades mit einer Konfiguration und/oder Ersteinrichtung des Rauchmelder-Alarmsystems sowie kontinuierlich und/oder in bevorzugt regelmäßigen Abständen periodisch während eines Überwachungsbetriebs des Rauchmelder-Alarmsystems erfolgt, und wobei dem Übertragungspfad, den Kommunikationspfaden und den Signalparametern entsprechende Daten in graphische Visualisierungen aufbereitet und die Visualisierungen auf einer Displayeinheit angezeigt werden.

9. Verfahren nach Anspruch 8, **gekennzeichnet durch** das automatische, von den Signalparametern abhängige Auswählen einzelner, im Frequenzspektrum beabstandeter Funkkanäle für mindestens einen der unmittelbaren Übertragungspfade.

## Claims

1. A smoke alarm system with
a plurality of smoke alarm units (TLN) connected wirelessly with one another and arranged for the exchange of data,
which are constructed so as to be able to be mounted in a stationary manner respectively at a location which is to be monitored, have transmission means (14) for wireless data exchange and smoke sensor means (20) for smoke detection, wherein a plurality of the smoke alarm units has respectively means (12) for the capturing of a transmission quality, in particular transmission signal strength, transmission loss and/or transmission interference values, of a direct transmission path to a respective other, in particular any other, of the smoke alarm units,
the capture means have storage means (16) for the storing of a signal parameter corresponding to the transmission quality to the respective other smoke alarm units and are constructed so that on the basis of the stored signal parameters the direct transmission path or an indirect transmission path formed via an intermediate smoke alarm unit or repeater unit, to each of the other smoke alarm units is determined and stored as communication path periodically and during a monitoring operation as a function of the signal parameters,
**characterized in that**
the smoke alarm units have alarm means (22) for the emitting of an acoustic and/or optical alarm signal and the capture means are constructed so that as a reaction to a smoke detection signal of the smoke sensor means, an activation of the alarm means of each of the other smoke alarm units takes place over the communication paths, wherein there are associated with the plurality of smoke alarm units display- and visualization means which, by means of a display unit, indicate the currently determined and stored transmission paths and the communication paths and respectively associated signal parameters as a graphic presentation.

2. The smoke alarm system according to claim 1,
**characterized in that**
the display- and visualization means are separate (PC) or are integrated into at least one of the smoke alarm units.

3. The smoke alarm system according to claim 1 or 2,
**characterized in that**
there are associated with the plurality of smoke alarm units separate set-up and/or control means (PC), which are constructed for a configuration, parameterization and/or monitoring of the smoke alarm units and are preferably realized by means of a computer unit.

4. The smoke alarm system according to claim 3,
**characterized in that**
data communication means for access via a preferably public data transmission network are associated with the set-up and/or control means.

5. The smoke alarm system according to one of claims 1 to 4,
**characterized in that**
the transmission means of the smoke alarm units are constructed for radio transmission via a plurality of radio channels which are able to be accessed and/or selected separately from one another.

6. The smoke alarm system according to claim 5,
**characterized in that**
the transmission means are constructed so that a channel selection for a transmission path takes place as a function of the signal parameter.

7. The smoke alarm system according to claim 5 or 6,
**characterized in that**
the transmission means of a smoke alarm unit are constructed so that a high frequency transmission power of the transmission means is able to be altered as a function of the signal parameters of the transmission paths to the other smoke alarm units, in particular adapts itself automatically to a predetermined minimum or maximum value of the signal parameters.

8. A method for operating a smoke alarm system with a plurality of smoke alarm units, connected wirelessly with one another and arranged for the exchange of data, which are constructed so as to be able to be mounted in a stationary manner respectively at a location which is to be monitored, have transmission means for wireless data exchange, smoke sensor means for smoke detection and alarm means for the emitting of an acoustic and/or optical alarm signal, for the operating of the smoke alarm system according to one of claims 1 to 7, **characterized by** the steps:
- capture of a transmission quality, in particular transmission signal strength, transmission loss and/or transmission interference values, of a direct transmission path between all smoke alarm units of the smoke alarm system,
- storing of a signal parameter corresponding to the transmission quality for each of the direct transmission paths in a storage unit at least of one of the smoke alarm units,
- determining of a communicating path for each of the smoke alarm units to every other of the plurality of smoke alarm units as the direct transmission path or as an indirect transmission path formed via an intermediate smoke alarm unit and/or a repeater unit,
- and activating of the alarm means of each of the other smoke alarm units as reaction to a smoke detection signal of the smoke sensor means of a smoke alarm unit via the communication paths,
wherein the capture of the transmission quality, the storing of the signal parameter corresponding to the transmission quality and the determining of the communication path takes place with a configuration and/or first set-up of the smoke alarm system and continuously and/or at preferably regular intervals periodically during a monitoring operation of the smoke alarm system, and wherein corresponding data are processed into graphic visualizations for the transmission path, the communication paths and the signal parameters and the visualizations are indicated on a display unit.

9. The method according to claim 8,
**characterized by** the automatic selecting, dependent on the signal parameters, of individual radio channels, spaced apart in the frequency spectrum, for at least one of the direct transmission paths.

## Revendications

1. Système d'alarme de détecteur de fumée, avec une pluralité d'unités de détection de fumée (TLN) reliées sans fil les unes aux autres et configurées pour l'échange de données, lesquelles sont respectivement réalisées pour pouvoir être installées de manière stationnaire dans un lieu à surveiller, et présentent des moyens de transmission (14) pour l'échange de données sans fil ainsi que des moyens de détection de fumée (20) pour la détection de fumée, une pluralité des unités de détection de fumée présentant respectivement des moyens (12) pour la détection d'une qualité de transmission, en particulier d'une intensité de signal de transmission, d'une atténuation de la transmission et/ou des valeurs de perturbation de la transmission d'une voie de transmission directe vers une autre unité de détection de fumée respective, en particulier vers chacune des autres unités de détection de fumée, les moyens de détection présentant des moyens de mémoire (16) pour le stockage d'un paramètre de signal correspondant à la qualité de transmission vers les autres unités de détection de fumée respectives et étant réalisés de manière à ce que, sur la base des paramètres de signal stockés, la voie de transmission directe, ou une voie de transmission indirecte formée par l'intermédiaire d'une unité de détection de fumée interposée ou d'une unité de répéteur, vers chacune des autres unités de détection de fumée soit déterminée et stockée en tant que voie de communication de manière périodique et pendant une opération de surveillance en fonction des paramètres de signal, **caractérisé en ce que** les unités de détection de fumée présentent des moyens d'alarme (22) pour l'émission d'un signal d'alarme acoustique et/ou optique et **en ce que** les moyens de détection sont réalisés de manière à ce que, en réaction à un signal de détection de fumée des moyens de détection de fumée, il s'en suit une activation des moyens d'alarme de chacune des autres unités de détection de fumée via les voies de communication, dans lequel on associe à la pluralité des unités de détection de fumée des moyens d'affichage et de visualisation lesquels affichent, à l'aide d'une unité d'affichage, les voies de transmission actuellement déterminées et stockées et les voies de communication et des paramètres de signal respectivement associés en tant que représentation graphique.

2. Système d'alarme de détecteur de fumée selon la revendication 1, **caractérisé en ce que** les moyens d'affichage et de visualisation sont distincts (PC) ou sont intégrés dans au moins l'une des unités de détection de fumée.

3. Système d'alarme de détecteur de fumée selon la revendication 1 ou 2, **caractérisé en ce que** l'on associe à la pluralité des unités de détection de fumée des dispositifs distincts et/ou moyens de commande (PC), lesquels sont conçus pour une configuration, un paramétrage et/ou une surveillance des unités de détection de fumée et sont de préférence réalisés au moyen d'une unité informatique.

4. Système d'alarme de détecteur de fumée selon la revendication 3, **caractérisé en ce que** l'on associe aux moyens de configuration et/ou de commande des moyens de communication de données pour l'accès via un réseau de transmission de données de préférence public.

5. Système d'alarme de détecteur de fumée selon l'une des revendications 1 à 4, **caractérisé en ce que** les moyens de transmission des unités de détection de fumée sont réalisés pour la radio-transmission via une pluralité de canaux radio accessibles et/ou sélectionnables indépendamment les uns des autres.

6. Système d'alarme de détecteur de fumée selon la revendication 5, **caractérisé en ce que** les moyens de transmission sont réalisés de manière à ce qu'un choix de canal pour une voie de transmission s'effectue en fonction du paramètre de signal.

7. Système d'alarme de détecteur de fumée selon la revendication 5 ou 6, **caractérisé en ce que** les moyens de transmission d'une unité de détection de fumée sont réalisés de manière à ce qu'une puissance d'émission de haute fréquence des voies de transmission soit variable en fonction des paramètres de signal des voies de transmission vers les autres unités de détection de fumée, en s'adaptant en particulier automatiquement à une valeur minimale ou maximale prédéterminée des paramètres de signal.

8. Procédé pour faire fonctionner un système d'alarme de détecteur de fumée avec une pluralité d'unités de détection de fumée reliées sans fil les unes aux autres et étudiées pour l'échange de données, lesquelles sont respectivement réalisées pour pouvoir être installées de manière stationnaire dans un lieu à surveiller, et présentent des moyens de transmission pour l'échange de données sans fil, des moyens de détection de fumée pour la détection de fumée ainsi que des moyens d'alarme pour l'émission d'un signal d'alarme acoustique et/ou optique, pour faire fonctionner le système d'alarme de détecteur de fumée selon l'une des revendications 1 à 7, **caractérisé par** les étapes suivantes :
- la détection d'une qualité de transmission, en particulier d'une intensité de signal de transmission, d'une atténuation de transmission et/ou de valeurs de perturbation de transmission d'une voie de transmission directe entre toutes les unités de détection de fumée du système d'alarme de détecteur de fumée,
- le stockage d'un paramètre de signal correspondant à la qualité de transmission pour chacune des voies de transmission directes dans une unité de mémoire d'au moins l'une des unités de détection de fumée,
- la détermination d'une voie de communication pour chacune des unités de détection de fumée vers chacune des autres d'entre la pluralité des unités de détection de fumée en tant que la voie de transmission directe ou en tant qu'une voie de transmission indirecte formée par l'intermédiaire d'une unité de détection de fumée interposée et/ou d'une unité de répéteur,
- et l'activation des moyens d'alarme de chacune de la pluralité des autres unités de détection de fumée en tant que réaction à un signal de détection de fumée des moyens de détection de fumée d'une unité de détection de fumée via les voies de communication,
dans lequel la détection de la qualité de transmission, le stockage du paramètre de signal correspondant à la qualité de la transmission et la détermination de la voie de communication s'effectue avec une configuration et/ou une première installation du système d'alarme de détecteur de fumée ainsi qu'en continu et/ou à intervalles périodiques de préférence réguliers pendant une opération de surveillance du système d'alarme de détecteur de fumée, et dans lequel des données correspondant à la voie de transmission, aux voies de communication et aux paramètres de signal sont préparées sous forme de visualisation graphique, et les visualisation sont affichées sur une unité d'affichage.

9. Procédé selon la revendication 8, **caractérisé par** la sélection automatique, en fonction des paramètres de signal, de canaux radio individuels espacés dans le spectre de fréquences pour au moins l'une des voies de transmission directes.
